# EUROPEAN PATENT SPECIFICATION

(11) **EP 2 956 007 B1**
(45) Date of publication and mention of the grant of the patent: **21.03.2018**
(21) Application number: 14722497.6
(22) Date of filing: 08.04.2014
(51) Int. Cl.: A21D 13/16, A21D 2/16, A21D 2/18

(54) **LOW FAT LAMINATED DOUGH AND PASTRY**
FETTARMER BLÄTTERTEIG UND FEINGEBÄCK
PÂTE ET PÂTISSERIE FEUILLETÉES À FAIBLE TENEUR EN MATIÈRES GRASSES

(30) Priority: 16.04.2013 US 201361812424 P
(43) Date of publication of application: 23.12.2015
(73) Proprietor: Dow Global Technologies LLC, Midland, MI 48674 (US)
(72) Inventor: ERGUN, Roja, Midland, MI 48640 (US); THOMSON, Bradley S., Farmington Hills, MI 48334 (US); HUEBNER-KEESE, Britta, NI 31311 Uetze (DE)
(74) Representative: Houghton, Mark Phillip
(86) International application number: PCT/US2014/033243
(87) International publication number: WO 2014/172135

(56) References cited:
- WO-A1-2012/147075
- DE-A1- 1 442 001
- GB-A- 1 005 802
- US-A- 5 258 190
- US-A1- 2005 123 668
- DATABASE WPI Week 2009 Thomson Scientific, London, GB; AN 2009-F09660 XP002726775, & JP 2009 034089 A 19 February 2009 (2009-02-19)

## Description

### BACKGROUND OF THE INVENTION

### Field of the Invention

The present invention relates to laminated dough used to make laminated pastries such as puff pastries, croissants and Danish pastries as well as a process to form the laminated dough.

### Introduction

Laminated pastries are popular pastries comprising multiple layers of dough that are typically expanded to some extent from one another for form a light and airy composition. Popular laminated pastries include puff-pastries, croissants, and Danish pastries. Laminated pastries are made by baking a laminated dough composition comprising layers of dough and a "roll-in" composition that mainly consists of a fat component such as butter, margarine or shortening. The laminated dough composition can contain 700 or more layers. Upon baking, moisture in the roll-in layer expands as a vapor causing the layers of dough to separate as they bake so as to form a highly desirable light, airy pastry product. The roll-in layer, while adding texture, flavor and consistency to both the laminated dough and resulting pastry, also adds fat. Roll-in compositions need to be in a semi-solid state at temperature at or just below 20 degrees Celsius (°C), which historically has required use of a high concentration of saturated fat. Commonly, 100 grams of laminated dough composition will contain approximately 54 grams of fat and 27 grams of the fat is saturated fat. In some countries a pastry can only be called a "puff-pastry" if the pastry contains at least 62 grams of fat for every 100 grams of bread flour. Hence, laminated pastries are generally considered to have a high fat content.

Consumption of trans and saturated fats is strongly linked to cardiovascular diseases. That makes laminated pastries undesirable for a healthy diet. Therefore, it is desirable to develop a way to form highly desirable light, airy pasty product without the extensive amount of saturated fat in order to provide a healthy form of laminated pastry. Modified roll-in composition, however, must perform similarly to the compositions with high levels of saturated fat. That is, a modified roll-in composition must not only be a semi-solid but must also expand a laminated dough composition in a similar fashion as the high fat content roll-in upon baking the laminated dough composition.

US2012/0183663 discloses oleogels as food grade alternatives to solid fats containing trans and saturated fats. However, it is not evident how the oleogels of this reference perform as a fat component in a laminated pastry roll-in composition.

US2012/0100251A1 discloses the use of lecithin organogels (that is, oleogels) in food compositions and includes an example of use of an organogel in preparing laminated pastries (Example 6). Notably, only up to 0.69 percent of the roll-in composition for the laminated pastry is organogel while over 37 percent of the roll-in composition remains as shortening. That means the organogel accounts for less than two percent of the fat component in the roll-in. Therefore, the use of organogel only minimally reduces the amount of shortening (hence, fat) in the laminated pastry. It is unclear whether the lecithin organogels disclosed in this reference can replace a greater extent of the fat component in a roll-in composition and still produce a suitable, laminated pastry and particularly a suitable puff pastry. US 5 258 190 A discloses a vegetable oil-based composition comprising from about 0.1% to about 10% by weight of water and 0.5% to about 35% by weight of a finely divided calcium citrate salt. It has been further discovered that the addition of carbohydrate based ingredients to the vegetable oil based composition containing the calcium citrate reaction product permits more water to be present and yet provide higher viscosity products and low calorie products such as margarine-like pastes useful as antisticking and laminating agents, especially in baking.

DE 14 42 001 A1 discloses a oft margarine comprising an oil-in-water emulsion containing (a) low melting fat (e.g. e.g. lard, palm oil, H2-hardened vegetable oil, fish- and/or animal fat); (b) water; (c) 1, 1-12% emulsifier and (d) 0.1-5% stabiliser. The stabiliser may be carboxymethyl cellulose. The margarine is suitable for use in puff pastry, as a thin layer.

GB 1 005 802 A discloses a method of manufacturing an edible, stable, fat-in-water type deformable composition suitable for use as roll-in when making puff pastry, which comprises forming a fat-in-water type emulsion by mixing a molten edible fat, water and at least one edible emulsifier at a temperature sufficiently high to melt the fat. At least one edible stabiliser is mixed with the molten 90 fat, water and emulsifier. The stabiliser is a carboxymethyl cellulose, sodium alginate, propylene glycol alginate, starch or natural gum.

JP 2009 034089 A discloses a plastic oil-fat composition used as margarine for roll-in for layered wheat flour puffed foods (e.g. Danish pastry, croissant or pie) comprising an oil-and-fat A, an oil-and-fat B and an oil-and-fat C in an oil phase and a water phase. The oil-and-fat C is a liquid oil. The plastic oil-fat composition can contain viscosifying stabilizer such as crystalline cellulose, carboxymethyl cellulose, methylcellulose, a starch, modified starch.

WO 2012/147075 A1 discloses a liquid vegetable based oil preparation especially useful as a margarine or butter substitute for baked goods, the preparation comprising a mixture of at least one vegetable oil, preferably canola oil with olein, wherein the olein comprises 1.5 to 4.5 percent by weight of emulsifier. The emulsifier is melted ethyl cellulose. It may be appreciated that the invented vegetable oil preparation can be used instead of margarine or butter in the preparation process of any dough or baking mixture.

US 2005/123668 A1 discloses a trans fat replacement system used in roll-in for laminated dough (e.g. croissant) comprising an expanded, low-density carbohydrate; at least one edible oil and an edible fat. The expanded low-density carbohydrate is selected from the group consisting of a dextrin, a starch, a cellulose and a gum. The edible oil is selected from the group consisting of an animal oil, a marine oil, a dairy oil, a fruit oil, a vegetable oil, a tree nut oil and combinations thereof. The edible fat is selected from the group consisting of shortening, butter, lard and margarine.

It remains desirable to provide a laminated dough composition that is suitable for making laminated pastries, the laminated dough composition having a reduced amount of saturated fats relative to commonly laminated dough compositions. In particular, it is desirable to be able to replace more than two percent by weight of the conventional fat component in the roll-in composition with an alternative, lower fat component.

### BRIEF SUMMARY OF THE INVENTION

The present invention provides a solution to the problem of providing a laminated dough composition that is suitable for making laminated pastries, the laminated dough composition having a reduced amount of saturated fats relative to commonly laminated dough compositions. Moreover, the present invention provides a roll-in component where more than two percent by weight of the conventional fat component in the roll-in composition is replaced with an alternative, lower fat component.

Surprisingly, the present invention provides laminated dough where the roll-in component is more than five weight-percent oleogel and yet produces a suitable laminated pastry.

Surprisingly, a roll-in composition comprising an oleogel comprising ethyl cellulose and a triacylglycerol selected from triacylglycerol oil and triacylglycerol fat can provide the solution to the aforementioned problem. The oleogel can be a complete or partial replacement for conventional fat components such as butter, margarine, lard or shortening while still resulting in indistinguishable performance during baking of a laminated dough composition into a laminated pastry.

It was also a surprising discovery of the present invention that carboxymethyl cellulose is necessary in the oleogel to prepare laminated pastries using unleavened dough such as puff pastries.

In a first aspect, the present invention is an article according to claim 1. In a second aspect, the present invention is a process according to claim 9. The article of the present invention is useful as laminated pastries or as precursors to laminated pastries. The process of the present invention is useful for preparing laminated pastries.

### DETAILED DESCRIPTION OF THE INVENTION

"Multiple" means two or more. "And/or" means "and, or as an alternative". All ranges include endpoints unless otherwise indicated.

"Puff pastry" is a laminated pastry made from a laminated dough article comprising 50 or more, preferably 81 or more and often comprises more than 700 layers of dough and roll-in composition. The dough of a puff pastry laminated dough article is typically unleavened.

The article of the present invention ("laminated article") comprises layers of dough and a roll-in composition. Typically, though not necessarily, the roll-in composition accounts for 40 weight percent (wt%) or more, generally 50 wt% or more and can be 60 wt% or more or even 70 wt% or more while at the same time is typically 75 wt% or less based on the combined weight of dough and roll-in composition.

The dough can be either leaven or unleavened. For puff pastries it is desirable for the dough to be unleavened. For croissants and Danish pastries the dough is typically leaven. Leaven dough contains yeast while unleavened dough does not contain (is free of) yeast.

The roll-in composition contains an oleogel. Oleogels are also known as "organogels". Oleogels are organic liquids that contain an additive to increase their rheological properties to resemble fats. Oleogels are typically free of water. Oleogels of the present invention comprise, and can consist of, triglycerol as an organic liquid and ethyl cellulose as an additive to increase rheological properties. It is desirable for the oleogel to contain 70 wt% or more, preferably 75 wt% or more, still more preferably 80 wt% or more, yet more preferably 85 wt% or more and can contain 90 wt% or more and even 99 wt% or more of triglycerol while at the same time desirably contains 99 wt% or less, preferably 95 wt% or less, still more preferably 92 wt% or less and most preferably 90 wt% or less triglycerol with wt% relative to combined weight of triglycerol and ethyl cellulose. It follows then that it is desirable for the oleogel to contain 30 wt% or less, preferably 25 wt% or less, still more preferably 20 wt% or less, yet more preferably 15 wt% or less and can contain 10 wt% or less and even one wt% or less of ethyl cellulose while at the same time desirably contains one wt% or more, preferably five wt% or more, still more preferably eight wt% or more and most preferably 10 wt% or more ethyl cellulose with wt% relative to combined weight of triglycerol and ethyl cellulose.

Trigylcerols are esters derived from glycerol and three fatty acids. The triacylglycerols of the present invention desirably are derived from organic plants, seeds, and animal fats. Preferably the triacylglycerols are derived from organic plants and/or seeds. The triacylglycerol desirably contain less than 20 wt%, preferably less than 15%, more preferably less than 10% saturated fats relative to triacylglycerol weight. As a reference, Table 1 reports the wt% saturated fat in a selection of triacylglycerols based on total triacylglycerol weight. Particularly desirably triacylglycerols include any one or combination or more than one selected from Safflower oil, canola oil, flaxseed oil, sunflower oil, corn oil, olive oil, sesame oil, soybean oil, peanut oil, rapeseed oil, linseed oil, palm oil, grape seed oil, argan oil, rice bran oil, echium oil, squid oil, salmon oil and halibut oil.

**Table 1**

| **Triglycerol** | **Weight**-**Percent Saturated Fat** |
|---|---|
| Safflower Oil | 6 |
| Canola Oil | 6 |
| Flaxseed Oil | 9 |
| Sunflower Oil | 10 |
| Corn Oil | 12 |
| Olive Oil | 12 |
| Sesame Oil | 14 |
| Soybean Oil | 14 |
| Peanut Oil | 16 |
| Cottonseed Oil | 25 |
| Chicken Fat | 27 |
| Lard (pork fat) | 36 |
| Beef Tallow | 46 |
| Palm Oil | 48 |
| Butter | 51 |
| Cocoa Butter | 58 |
| Palm Kernel Oil | 79 |
| Coconut Oil | 84 |

The ethyl cellulose desirably has a degree of substitution (DS) of 2.15 or higher, preferably 2.2 or higher, more preferably 2.4 or higher, yet more preferably 2.44 or higher, still more preferably 2.45 or higher and even more preferably 2.46 or higher while at the same time desirably having a DS of 3 or lower, preferably 2.80 or lower, more preferably 2.70 or lower, yet more preferably 2.65 or lower, still more preferably 2.60 or lower and even more preferably 2.57 or lower. Determine DS according to the Zeisel method.

The ethyl cellulose typically has a 5% solution viscosity that is 3 milliPascals*second (mPa*s) or higher, preferably 16 mPa*s or higher, still more preferably 18 mPa*s or higher and at the same time typically is 150 mPa*s or lower, more typically 120 mPa*s, yet more typically 110 mPa*s or lower, preferably 76 mPa*s or lower and more preferably 50 mPa*s or lower. A "5% solution viscosity" refers to the viscosity of a 5wt% solution of the ethyl cellulose in a mixture of toluene/ethanol (80:20 weight ratio). Measure viscosity at 25°C in an Ubbelohde viscometer. For a typical viscosity analysis weight 57 grams of a 80/20 w/w toluene/ethanol mixture into a dry 8-ounce bottle and add three grams dry weight of ethyl cellulose. Place the bottle on a mechanical shaker and shake until all ethyl cellulose goes into solution (approximately 20 minute4s). Measure the viscosity of the resulting solution within 24 hours of preparing the solution. To measure viscosity fill a Ubbelohde viscometer with solution and place in a water bath at 25°C until the solution equilibrates to 25°C. Follow the instructions for the Ubbelohde viscometer to suck up the solution through the calibration flow tube and allow it to drain. The viscosity is determined from the time of the flow between an upper and lower calibration mark. Values for ethyl cellulose 5% solution viscosity correlate to ethyl cellulose molecular weight, in that higher viscosities correspond to higher molecular weights.

Examples of suitable ethyl cellulose for use in the oleogel of the present invention include any one or combination of more than one of those selected from a group consisting of those in Table 2 :

**Table 2**

| **DS** | **5% solution viscosity (mPa*s)** | **Tradename of Commercially Available Material** |
|---|---|---|
| 2.46-2.57 | 3-5.5 | ETHOCEL™ Std 4 |
| 2.46-2.57 | 6-8 | ETHOCEL™ Std 7 |
| 2.46-2.57 | 9-11 | ETHOCEL™ Std 10 |
| 2.46-2.57 | 12.6-15.4 | ETHOCEL™ Std 14 |
| 2.46-2.57 | 18-22 | ETHOCEL™ Std 20 |
| 2.46-2.57 | 41-49 | ETHOCEL™ Std 45 |

| | | |
|---|---|---|
| ETHOCEL is a trademark of The Dow Chemical Company | | |

Particularly desirably are ethyl cellulose materials having the properties of ETHOCEL™ Std 20 and ETHOCEL Std 45 and combinations thereof. The food grade of these ethyl cellulose materials is further labeled as "Premium" (for example, ETHOCEL™ Std 45 Premium) but have the same DS and viscosity values recorded in Table 2.

One way to prepare the oleogel is by first preparing a mixture of triglycerol and ethyl cellulose and heat while agitating (for example, stirring) at a temperature desirably 80°C or higher, preferably 90°C or higher, still more preferably 130°C or higher, yet more preferably 140°C or higher and yet even more preferably 143°C or higher while at the same time desirably 250°C or lower, preferably 200°C or lower, yet more preferably 170°C or lower, still more preferably 160°C or lower. Typically, heat and agitate for one to 120 minutes to solubilize the ethyl cellulose in the oil. Allow the solution to cool to room temperature. The oleogel forms as the solution cools.

Desirably, form the oleogel by heating and agitating under an inert atmosphere or under a vacuum to avoid oxidation of the components. Examples of inert gases that are suitable as inert atmospheres include one or any combination of more than one of nitrogen and noble gases such as argon. Desirably the inert atmosphere contains less than 90 grams of per cubic meter (g/m³), preferably less than 50 g/m³ and more preferably less than 25 g/m³ of oxygen.

One method of preparing the oleogel is by combining triacylglycerol and ethyl cellulose together in a system such as a reactor (for example a glass reactor), purging the system with inert gas while agitating and then heating under an inert gas purge. Upon solubilization of the ethyl cellulose the system is allowed to cool, preferably under an inert atmosphere purge.

Upon heating the combination of triacylglycerol and ethyl cellulose to a temperature above the glass transition temperature of the ethyl cellulose the ethyl cellulose solubilizing in the triacylglycerol to create a three-dimensional, thermo-reversible gel network upon cooling. Due to restricted mobility and migration of the triacylglycerol inside the polymer network, the resulting oleogel provides solid-like properties of crystalline triacylglycerols without high levels of saturated fatty acids that are undesirable for consumption. Replacing crystalline triacylglycerols with healthy triacylglycerols (those with lower saturated fats) is desirable for a healthier triacylglycerol alternative.

Stabilizers (such as surfactants) are unnecessary in the oleogel and the oleogel can be free from stabilizers such as surfactants. However, stabilizers may be included as they can increase properties of the oleogel such as firmness. Examples of stabilizers include polyoxyethylene sorbitan monooleate, polyoxyethylene sorbitan tristearate, polyoxyethylene sorbitan monostearate, sorbitan monostearates, glyceryl monooleate, glcyeryl monostearate, glyceryl monopalmitate, polyglycerol esters, diglyceride, monoglyceride, calcium stearoyl lactylate, sodium stearoyl lactylate, sucrose esters, lecithin and triethyl citrate.

The oleogel can contain option ingredients such as antioxidants. Suitable antioxidants include those selected from butylated hydroxyanisol, butylated hydroxytoluene, tertiary butyl hydroquinone, ascorbic acid, sodium ascorbate, calcium ascorbate, β-carotene, tocopherols, chlorogenic acids, gallates and flavanols.

The roll-in composition contains two wt% or more, preferably five wt% or more, more preferably 20 wt% or more oleogel and can contain 100 wt% oleogel based on roll-in composition weight. Generally, the roll-in composition contains less than 100 wt% oleogel.

It is desirable for the roll-in composition to further contain flour, water, or both flour and water. Flour adds to the handleability of the roll-in composition while the water facilitates expansion of the resulting laminated dough article when baking into a laminated pastry. If flour is present in the roll-in composition then the roll-in composition typically contains 5 wt% or more, preferably 10 wt% or more and typically 25 wt% or less, preferably 20 wt% or less flour based on roll-in composition weight. It is typical for the flour concentration to be about 15-16 wt% of the roll-in composition weight. When water is present in the roll-in composition the roll-in composition typically contains two wt% water or more, preferably 4 wt% water or more, still more preferably 5 wt% water or more yet more preferably 6 wt% water or more and typically 15 wt% water or less, preferably 10 wt% water or less based on total roll-in composition weight. It is typical for the water concentration to be 8-9 wt% of the roll-in composition weight.

The roll-in composition can comprise carboxymethyl cellulose (CMC). When the dough layer is unleavened the roll-in composition desirably does contain CMC. CMC increases the viscosity of the roll-in composition thereby keeping the roll-in composition from squeezing out from between dough layers while preparing the laminate article of the present invention. It has become evident in discovering this invention that the roll-in composition is particularly susceptible to squeezing out from between dough layers when the dough is unleavened. While the laminate article of the present invention can be free of CMC, even with unleavened dough, it is preferable to include CMC in the roll-in composition particularly when the dough is unleavened. CMC is typically present at a concentration of five wt% or less, preferably three wt% or less, more preferably one wt% or less, still more preferably 0.5 wt% or less and can be 0.3 wt% or less. At the same time, when present the CMC is generally present at a concentration of 0.05 wt% or more, preferably 0.1 wt% or more and most preferably 0.2 wt% or more. CMC concentration is in wt% relative to total roll-in composition weight.

The roll-in composition can comprise one or any combination of more than one traditional fat component such as butter, margarine, lard, and shortening.

The article ("laminated article") of the present invention comprises layers of dough and roll-in composition. Typically, the article has a layer of dough on either opposing side (sandwiching) each layer of roll-in composition. Hence, the number of layers is typically three or more. More typically, the number of layers is 50 or more, preferably 100 or more and can be 200 or more, 300 or more, 400 or more 500 or more, 600 or more, even 700 or more. It is common for puff-pastries to require a laminated article having more than 700 layers.

The laminated article of the present invention typically has a thickness of five millimeters (mm) or more, preferably 10 mm or more and at the same time generally has a thickness of 20 mm or less, preferably 15 mm or less and most preferably 13 mm or less. Measure thickness through the dough and roll-in layers (that is, perpendicular to the plane of the dough and roll-in layers).

Prepare the laminated article of the present invention by: (a) providing a dough as previously described and a roll-in composition comprising a mixture of ethyl cellulose and a triacylglycerol as previously described; (b) disposing the roll-in composition on the dough so as to form a layered composition comprising a layer of roll-in composition on a layer of dough; and (c) folding the layered composition on itself one or more than one time to form an article of the present invention.

Step (b) typically entails first rolling out a flat layer of dough and then placing roll-in composition on top of the flat layer of dough and rolling out the roll-in layer to form a flat layer of roll-in composition over the flat layer of dough (a two-layer laminate). It is common to refrigerate the roll-in composition prior to disposing it on the dough and rolling it out onto the dough in order to increase its viscosity.

Once the roll-in composition is rolled out over the dough layer, the two-layer laminate is typically folded on top of itself and flattened by pounding, rolling or both pounding and rolling to form a flattened sheet comprising multiple layers of dough and roll-in composition. The folding followed by pounding and/or rolling is repeated any number of desired times to form a laminated article having a desired number of layers.

The process can further include baking the resulting laminated article to form a laminated pastry such as a puff-pastry, croissant or Danish pastry. The process can include first cutting the laminated pastry and/or otherwise shaping the laminated pastry into a particular size and shape prior to baking.

### Examples

### Example 1: Danish Pastry

Prepare a dough according to the composition in Table 3. Mix the dry ingredients in a bowl then add the water, vanilla, margarine and sour cream. Mix using a KitchenAid™ brand mixer (KitchenAid is a trademark of Whirlpool Properties, Inc.) at speed 2 for approximately five minutes using a dough hook. Mixing should continue until the dough stretch changes and begins pulling everything to itself and off the side of the bowl.

**Table 3**

| **Ingredient** | **Amount (grams)** |
|---|---|
| Bread flour | 490 |
| Margarine | 56.5 |
| Ice water | 207 |
| Sour cream | 55 |
| Salt | 21 |
| Sugar | 38 |
| Vanilla | 2 |
| Cake yeast | 58 |

Prepare an oleogel by combining an ethyl cellulose having a DS of 2.46-2.57 and a 5% solution viscosity of 41-49 mPa*s (for example, ETHOCEL Std 45 Premium) and omega 9 canola oil into a lab reactor to form a mixture. The concentration of ethyl cellulose is 12 wt% based on combined weight of ethyl cellulose and canola oil. Purge the reactor with an inert gas to create an inert atmosphere above the mixture and heat to 155°C while stirring at 500 revolutions per minute. Hold at 155°C while continuing to mix for 35 minutes. Allow the mixture to cool to approximately 23°C. The resulting mixture will be an oleogel.

Prepare a one wt% solution of carboxymethyl cellulose (WALOCEL™ 40000PA, WALOCEL is a trademark of The Dow Chemical Company) by slowly adding one wt% of the carboxymethyl cellulose to 99 wt% water at 23°C while stirring with an overhead stirrer at 800-1000 revolutions per minute and continue mixing for 2-3 hours until the carboxymethyl cellulose is completely solubilized as evidenced by the mixture becoming clear.

Prepare an oleogel emulsion from the oleogel and one-wt% carboxymethyl cellulose solution. Slowly add 20 weight-parts of the one wt% aqueous carboxymethyl cellulose (CMC) solution to 80 weight-parts of oleogel while mixing with a KitchenAid mixer at a speed of 9 for five minutes at 23°C or until achieving homogeneous emulsion. The resulting emulsion is 80 wt% oleogel, 19.8 wt% water and 0.2 wt% carboxymethyl cellulose.

Prepare a roll-in composition using the oleogel emulsion and the composition of Table 4. Begin by blending the butter in a bowl at a medium speed using a paddle blend for about 15 seconds to soften the butter. Add to the butter the oleogel and mix well for about two minutes. Remove the resulting mixture from the bowl and form into a rectangle about 2.54 centimeters thick on wax paper, wrap with wax paper and refrigerate until firm.

**Table 4**

| **Ingredient** | **Amount (wt%)** | **Amount (g)** |
|---|---|---|
| Oleogel | 23 | 55.2 |
| Rice starch | 2 | 4.8 |
| Rice flour | 25 | 60 |
| Butter | 50 | 120 |

Prepare a laminated article by first rolling out 400 grams (g) of the dough to form a flat dough layer and then roll out 240 g of the roll-in composition on top of the dough to form a layered structure. Tri-fold the layered structure by folding 1/3 of the layered structure on top of itself and then folding the remaining 1/3 of the layered structure on top of the already folded thirds. Refrigerate the resulting composition for about 10 minutes to cool it. Roll out the cooled composition and once again tri-fold it and cool it. Repeated the roll out, tri-fold and cooling three times. After the last roll out cut the resulting laminated article into squares that are approximately 10 centimeters by 12 centimeters in dimensions. Make cuts in the top of the squares, fold in the points and top with apricot jam. Proof the squares at approximately 38°C (100 degrees Fahrenheit (°F)) for 30 minutes. Bake at 185°C (365°F) for 20 minutes. The resulting Danish pastry is flaky with good texture.

### Comparative Example A: Puff-Pastry with Butter

Prepare a dough with the composition shown in Table 5. Sift the flours together and blend in the butter on low speed with a dough hook using a KitchenAid brand mixer until pea-sized nuggets form. If necessary, hand mix the butter into the flour until pea-sized nuggets form. In a separate container combine water and salt to form a solution. Pour the solution all at once onto the dough and mix on low speed for about three minutes or until smooth. Scrape down the side and bottom of the mixing bowl at least one time during mixing to ensure complete mixing. Remove the dough from mixing bowl and shape into a rectangle on a parchment lined sheet tray. Cool the dough in a refrigerator for 30-60 minutes.

**Table 5**

| **Ingredient** | **Wt%** |
|---|---|
| Bread flour | 44.91 |
| Cake flour | 10.36 |
| Butter | 6.89 |
| Water | 36.56 |
| Salt | 1.28 |

Prepare a roll-in composition having the component ratios listed in Table. Sift the flour together in a bowl. Blend the butter in a bowl at medium speed using a paddle mixing head on a KitchenAid brand mixer for about 15 seconds to soften the butter. Add to the butter to the flour and mix well for about two minutes. Remove the resulting mixture from the bowl and refrigerate until firm.

**Table 6**

| **Ingredient** | **Wt%** |
|---|---|
| Butter | 94.44 |
| Break Flour | 9.35 |
| Cake Flour | 6.21 |

Prepare a laminated article using the dough and roll-in composition. Roll out the dough into a rectangle to a thickness of 10-13 mm on a flour-dusted work top. Roll out the roll-in composition to a size equal to half the size of the dough. Please the roll-in composition on one half of the dough with just enough of the dough showing around the roll-in composition edged to pinch when folded. Fold the second half of dough over the roll-in composition and pinch (seal) the edges of the dough around the roll-in composition to form a sandwiched article. Roll out the resulting sandwiched article to a thickness of 10-13 mm while maintaining a rectangular shape. Fold left and right sides in to meet at the center. Fold the sides on top of one another along the center line as if closing a book. Refrigerate for 30 minutes. Turn the composition 90 degrees and roll into a rectangle 10-13 mm thick. Fold halves to the center and then on top of one another as before and refrigerate 30 minutes. Turn 90 degrees and roll out into a rectangle. Repeat this process of folding, refrigerating and rolling out four more times. After rolling out the last time fold as before and let rest in a cooler 30 minutes then remove and roll out into a 10-13 mm thick sheet of laminated dough.

Preheat a convection oven to 478°C (400°F) on high fan. Cut the laminated dough into 10 centimeter by 12 centimeter rectangles and place on parchment lined trays. Bake five minutes on high fan at 478°C (400°F) and for an additional 5-7 minutes at 450°C (350°F). The laminated dough pieces become puff-pastries having 26.8 grams of saturated fat per 100 grams of puff pastry.

### Example 2: Puff-Pastry with >40% Oleogel in Roll-In Composition

Prepare an oleogel containing 12 wt% ethyl cellulose having a DS of 2.46-2.57 and a 5% solution viscosity of 41-49 mPa*s (ETHOCEL Std 45 Premium) in canola oil in like manner as described for the oleogel of Comparative Example A.

Prepare a dough with the composition shown in Table 7. Prepare the dough as described for preparing dough in Comparative Example A except use the oleogel instead of butter.

**Table 7**

| **Ingredient** | **Wt%** |
|---|---|
| Bread flour | 44.91 |
| Cake flour | 10.36 |
| Water | 37.59 |
| Salt | 1.28 |
| Ethyl cellulose/canola Oil Oleogel | 5.86 |

Prepare a roll-in composition as described in Comparative Example A except having the component ratios listed in Table 8.

**Table 8**

| **Ingredient** | **Wt%** |
|---|---|
| Butter | 35 |
| Break Flour | 9 |
| Cake Flour | 6.5 |
| Oleogel | 40.5 |
| 3 wt% solution of carboxy methyl cellulose (WALOCEL 40000PA) in water | 9 (0.27 wt% actual CMC) |

Prepare a laminated article from the dough and oleogel in like manner as described for Comparative Example A and bake into puff pastries as described in Comparative Example A. The resulting puff pastries are well puffed, crispy and have a clean taste. Additionally the resulting puff pastries only have 2.4 g of saturated fat per 100 gram of puff pastry, 9% of the 26.8 g of saturated fat per 100 g puff pastry of Comparative Example A.

### Example 3: Puff Pastry

Prepare a dough a described in Example 2 except using only the following ingredients: 48.8 wt% bread flour, 10.6 wt% cake flour, 7 wt% butter, 35.3 wt% water and 1.3 wt% salt.

Prepare an oleogel as described for Example 2.

Prepare a laminated article (Example 3) from the dough and roll-in composition as described for Example 2. Prepare and bake the laminated article as described in Example 2 to prepare a puff pastry.

The resulting puff pastry has 12.6 g trans fat, 47 wt% of the trans fat relative to corresponding butter-containing puff pastry of Comparative Example A.

### Example 4: Puff Pastry without Carboxymethyl Cellullose

Prepare a dough as described for Example 3. Prepare a roll-in as described for Example 2, except prepare the roll-in with only the following ingredients: 35 wt% butter, 9 wt% bread flour, 6.6 wt% cake flour, 40.8 wt% 12% Oleogel and 8.6 wt% water.

Prepare a laminated article (Example 4) from the dough and roll-in composition and prepare and bake it to form a puff-pastry. Example 4 illustrates an ability to prepare a reduced fat puff-pastry without using carboxymethyl cellulose.

### Comparative Example B: Croissant with Laminating Margarine

Prepare a dough by placing 250 grams (g) of bread flour into a bowl for a KitchenAid™ brand mixer. Add 20 g of yeast into a hole in the center of the bread flour. Add 15 g sugar, 100 ml cold milk, 30 g laminating margarine, 1.5 g salt, and 50 g egg yolk. Knead the components together for one minute on mixing level one of the KitchenAid mixer and five minutes on level two. Refrigerate the resulting dough for one hour.

Prepare a roll-in composition from 150 g laminating margarine by rolling it into a rectangular block approximately one centimeter thick.

Roll the cooled dough with some flour into a one centimeter thick rectangular block that is larger in dimension that the roll-in composition block. Place the roll-in composition in the center of the dough block. Fold the bottom and then the top of the dough block over the roll-in composition block to cover the roll-in composition. Roll out the resulting laminated article lengthwise and fold both ends in to the middle. Roll out lengthwise again and fold both ends towards the middle. Roll a third time and wrap in foil and place in a refrigerator for 30 minutes. Remove the material from the refrigerator and roll out lengthwise. Fold both ends towards the middle and then fold in the middle. Roll the resulting laminated article our to make it thinner, wrap in foil and refrigerate for 30 minutes.

Place baking paper on a baking tray. Roll the laminated article out to a thickness of about 7-8 millimeters and cut into nine elongated triangles. Stretch the bottom edge and fold a small bit onto itself. Roll the triangles and bend into a croissant. Brush eggwash onto the croissants and let them rise for 30 minutes. Bake in a convection oven at croissant program (165°C for 8 minutes, then 175°C for 8 minutes or until golden brown).

The resulting croissants have a total fat content of 27.0 wt% and a saturated content of 24.5 wt%.

### Example 5: Croissant with 39 wt% Oleogel Roll-In

Prepare an oleogel of 7.1 wt% ethyl cellulose having a DS of 2.46-2.57 and a 5% solution viscosity of 41-49 mPa*s (ETHOCEL Std 45 Premium) in sunflower oil. Place a known amount of sunflower oil into a three-necked flask. Add ethyl cellulose to the sunflower oil while stirring at 150 revolutions per minute (rpm) until the concentration of ethyl cellulose is 7.1 wt% of the total solution. Allow the solution to mix for 10 minutes at 20°C while mixing at 150 rpm. Heat the mixture to 155°C while mixing at 75 rpm and maintain temperature between 150°C and 160°C for 40 minutes while mixing at 75 rpm. Pour resulting solution into a beaker and allow to cool. Store solution in a refrigerator until used.

Prepare a fat component by melting 108 g laminating margarine in a microwave. Place container with melted laminating margarine into a water bath at 95°C and stir with a dissolve blade at 800 rpm. Add 69.1 g of the oleogel and three grams of water and stir at 800 rpm for two minutes, then 1000 rpm for 20 minutes. Store the resulting fat component in the refrigerator overnight.

Repeat Comparative Example B but use the fat component instead of the laminating margarine in the procedure of Comparative Example B.

The resulting croissants are indistinguishable from those of Comparative Example B but only contains 16.2 wt% saturated fats as opposed to 24.5 wt% in the croissants of Comparative Example B. Example 5 croissants have 34% less saturated and trans fats but are essentially indistinguishable from Comparative Example B croissants. This reduction is a result of replacing 39 wt% of the roll-in composition with an oleogel.

### Example 6: Croissant with 46 wt% Oleogel Roll-In (40% Reduction in Saturated Fat)

Prepare an oleogel of 7.1 wt% ethyl cellulose having a DS of 2.46-2.57 and a 5% solution viscosity of 41-49 mPa*s (ETHOCEL Std 45 Premium) in sunflower oil. Place a known amount of sunflower oil into a three-necked flask.. Add ethyl cellulose to the sunflower oil while stirring at 150 revolutions per minute (rpm) until the concentration of ethyl cellulose is 7.1 wt% of the total solution. Allow the solution to mix for 10 minutes at 20°C while mixing at 150 rpm. Heat the mixture to 155°C while mixing at 75 rpm and maintain temperature between 150°C and 160°C for 40 minutes while mixing at 75 rpm. Pour resulting solution into a beaker and allow to cool. Store solution in a refrigerator until used.

Prepare a fat component by placing 69 g laminating margarine into a bowl for a KitchenAid™ brand mixer and stir with a whisk at speed 5 for 15 seconds until smooth. Then add 69.1 g of the oleogel, 2.9 g water, 1.5 g rice starch (REMYLINE™ AX-DR; REMYLINE is a trademark of Beneo-Remy N.V. Joint Stock Company) and 7.5 g bread flour and mix for 30 seconds at speed 5. Whip the fat component down into the bowl and mix for another 1 minute and 30 seconds at speed 5. Refrigerate the fat component overnight.

Repeat Comparative Example B but use the fat component of this Example in the roll-in instead of the laminating margarine in the procedure of Comparative Example B. In addition use 27.1 g laminating margarine and 2.9 g water instead of 30 g laminating margarine in the dough.

The resulting croissants are indistinguishable from those of Comparative Example B but only contain 14.7 wt% saturated as opposed to 24.5 wt% in the croissants of Comparative Example B. Example 6 croissants have 40 % less saturated fat but are essentially indistinguishable from Comparative Example B croissants.

### Example 7: Alternative Croissant with 46 wt% Oleogel Roll-In (60% Reduction in Saturated Fat)

Prepare an oleogel of 7.1 wt% ethyl cellulose having a DS of 2.46-2.57 and a 5% solution viscosity of 41-49 mPa*s (ETHOCEL Std 45 Premium) in sunflower oil. Place a known amount of sunflower oil into a three-necked flask.. Add ethyl cellulose to the sunflower oil while stirring at 150 revolutions per minute (rpm) until the concentration of ethyl cellulose is 7.1 wt% of the total solution. Allow the solution to mix for 10 minutes at 20°C while mixing at 150 rpm. Heat the mixture to 155°C while mixing at 75 rpm and maintain temperature between 150°C and 160°C for 40 minutes while mixing at 75 rpm. Pour resulting solution into a beaker and allow to cool. Store solution in a refrigerator until used.

Prepare a fat component by placing 52.9 g laminating margarine into a bowl for a KitchenAid™ brand mixer and stir with a whisk at speed 5 for 15 seconds until smooth. Then add 52.97 69.1 g oleogel, 2.23 g water, 1.15 g rice flour (Remyline AX-DR) and 5.75g bread flour and mix for 30 seconds at speed 5. Whip fat component down into the bowl and mix for another 1 minute and 30 seconds at speed 5. Refrigerate the fat component overnight.

Repeat Comparative Example B but use the 96 g of the fat component of this Example in the roll-in and 19 g of the fat component of this Example and 2.9 g water in the dough instead of the laminating margarine in the procedure of Comparative Example B. The resulting croissants have a slightly dryer mouth feel but otherwise are indistinguishable from those of Comparative Example B but only contains 9.8 wt% saturated as opposed to 24.5 wt% in the croissants of Comparative Example B. Example 7 croissants have 60 % less saturated fat than Comparative Example B croissants.

## Claims

1. An article comprising layers of dough and a roll-in composition, the roll-in composition containing at least two weight-percent based on total roll-in composition weight of an oleogel comprising ethyl cellulose and a triacylglycerol;
wherein said oleogel is a three-dimensional, thermo-reversible gel network.

2. The article of Claim 1, further **characterized by** the roll-in composition further comprising flour and water.

3. The article of any previous Claim, further **characterized by** the roll-in composition further comprising carboxymethyl cellulose.

4. The article of Claim 3, further **characterized by** the concentration of carboxymethyl cellulose being one weight-percent or more and eight weight-percent or less based on total roll-in composition weight.

5. The article of any previous Claim, further **characterized by** the roll-in composition containing 20 weight-percent or more of the oleogel based on roll-in composition weight.

6. The article of any previous Claim, further **characterized by** the weight of triacylglycerol being 80 weight percent or more and 99 weight-percent or less based on total weight of triacylglycerol and ethyl cellulose in the oleogel.

7. The article of any previous Claim, further **characterized by** the triacylglycerol being one or any combination or more than one triacylglycerol selected from a group consisting of canola oil, sunflower oil, corn oil, flaxseed oil, palm oil, olive oil, soybean oil, safflower oil, peanut oil, grape seed oil, sesame oil, argan oil, rice bran oil, algal oil, echium oil, squid oil, salmon oil, and halibut oil.

8. The article of any previous Claim, wherein the roll-in composition further comprises a component selected from a group consisting of butter, margarine, lard and shortening.

9. A process comprising: (a) providing dough and a roll-in composition, the roll-in composition containing at least two weight-percent based on total roll-in composition weight of an oleogel comprising a mixture of ethyl cellulose and a triacylglycerol, wherein said oleogel is a three-dimensional, thermo-reversible gel network; (b) disposing the roll-in composition on the dough so as to form a layered composition comprising a layer of roll-in composition on a layer of dough; and (c) folding the layered composition on itself one or more than one time to form an article of any previous Claim.

10. The process of Claim 9, further comprising baking the resulting article of Claim 9 to form a laminated pastry.

## Patentansprüche

1. Ein Gegenstand, beinhaltend Schichten aus Teig und einer Einrollzusammensetzung, wobei die Einrollzusammensetzung bezogen auf das Gesamtgewicht der Einrollzusammensetzung zu mindestens zwei Gewichtsprozent ein Oleogel, beinhaltend Ethylcellulose und ein Triacylglycerol, enthält;
wobei das Oleogel ein dreidimensionales, thermoreversibles Gelnetzwerk ist.

2. Gegenstand gemäß Anspruch 1, ferner **dadurch gekennzeichnet, dass** die Einrollzusammensetzung ferner Mehl und Wasser beinhaltet.

3. Gegenstand gemäß einem der vorhergehenden Ansprüche, ferner **dadurch gekennzeichnet, dass** die Einrollzusammensetzung ferner Carboxymethylcellulose beinhaltet.

4. Gegenstand gemäß Anspruch 3, ferner **dadurch gekennzeichnet, dass** die Konzentration von Carboxymethylcellulose bezogen auf das Gesamtgewicht der Einrollzusammensetzung ein Gewichtsprozent oder mehr und acht Gewichtsprozent oder weniger beträgt.

5. Gegenstand gemäß einem der vorhergehenden Ansprüche, ferner **dadurch gekennzeichnet, dass** bezogen auf das Gewicht der Einrollzusammensetzung die Einrollzusammensetzung zu 20 Gewichtsprozent oder mehr das Oleogel enthält.

6. Gegenstand gemäß einem der vorhergehenden Ansprüche, ferner **dadurch gekennzeichnet, dass** bezogen auf das Gesamtgewicht von Triacylglycerol und Ethylcellulose in dem Oleogel das Gewicht des Triacylglycerols 80 Gewichtsprozent oder mehr und 99 Gewichtsprozent oder weniger beträgt.

7. Gegenstand gemäß einem der vorhergehenden Ansprüche, ferner **dadurch gekennzeichnet, dass** das Triacylglycerol ein oder eine beliebige Kombination von oder mehr als ein Triacylglycerol, ausgewählt aus einer Gruppe, bestehend aus Rapsöl, Sonnenblumenöl, Maisöl, Leinöl, Palmöl, Olivenöl, Sojaöl, Safloröl, Erdnussöl, Traubenkernöl, Sesamöl, Arganöl, Reiskleieöl, Algenöl, Echiumöl, Tintenfischöl, Lachsöl und Heilbuttöl, ist.

8. Gegenstand gemäß einem der vorhergehenden Ansprüche, wobei die Einrollzusammensetzung ferner einen Bestandteil beinhaltet, ausgewählt aus einer Gruppe, bestehend aus Butter, Margarine, Schmalz und Backfett.

9. Ein Verfahren, das Folgendes beinhaltet: (a) Bereitstellen von Teig und einer Einrollzusammensetzung, wobei die Einrollzusammensetzung bezogen auf das Gesamtgewicht der Einrollzusammensetzung zu mindestens zwei Gewichtsprozent ein Oleogel, beinhaltend eine Mischung von Ethylcellulose und einem Triacylglycerol, enthält, wobei das Oleogel ein dreidimensionales, thermoreversibles Gelnetzwerk ist; (b) Aufbringen der Einrollzusammensetzung auf dem Teig, um eine geschichtete Zusammensetzung, beinhaltend eine Schicht Einrollzusammensetzung auf einer Schicht Teig, zu bilden; und (c) Falten der geschichteten Zusammensetzung einmal oder mehr als einmal auf sich selbst, um einen Gegenstand gemäß einem der vorhergehenden Ansprüche zu bilden.

10. Verfahren gemäß Anspruch 9, ferner beinhaltend das Backen des resultierenden Gegenstands gemäß Anspruch 9, um ein mehrlagiges Gebäckstück zu bilden.

## Revendications

1. Un article comprenant des couches de pâte et d'une composition formant ingrédient de tourage, la composition formant ingrédient de tourage contenant au moins deux pour cent en poids rapporté au poids total de composition formant ingrédient de tourage d'un oléogel comprenant de l'éthyl cellulose et un triacylglycérol ;
dans lequel ledit oléogel est un réseau de gel thermoréversible, tridimensionnel.

2. L'article de la revendication 1, caractérisé en sus par le fait que la composition formant ingrédient de tourage comprend en sus de la farine et de l'eau.

3. L'article de n'importe quelle revendication précédente, caractérisé en sus par le fait que la composition formant ingrédient de tourage comprend en sus de la carboxyméthyl cellulose.

4. L'article de la revendication 3, caractérisé en sus par le fait que la concentration de carboxyméthyl cellulose est de un pour cent en poids ou plus et de huit pour cent en poids ou moins rapporté au poids total de composition formant ingrédient de tourage.

5. L'article de n'importe quelle revendication précédente, caractérisé en sus par le fait que la composition formant ingrédient de tourage contient 20 pour cent en poids ou plus de l'oléogel rapporté au poids de composition formant ingrédient de tourage.

6. L'article de n'importe quelle revendication précédente, caractérisé en sus par le fait que le poids de triacylglycérol est de 80 pour cent en poids ou plus et de 99 pour cent en poids ou moins rapporté au poids total de triacylglycérol et d'éthyl cellulose dans l'oléogel.

7. L'article de n'importe quelle revendication précédente, caractérisé en sus par le fait que le triacylglycérol est un ou toute combinaison ou plus d'un triacylglycérol sélectionné dans un groupe constitué de l'huile de colza, de l'huile de tournesol, de l'huile de maïs, de l'huile de lin, de l'huile de palme, de l'huile d'olive, de l'huile de soja, de l'huile de carthame, de l'huile d'arachide, de l'huile de pépins de raisin, de l'huile de sésame, de l'huile d'argan, de l'huile de son de riz, de l'huile algale, de l'huile d'echium, de l'huile de calamar, de l'huile de saumon, et de l'huile de flétan.

8. L'article de n'importe quelle revendication précédente, dans lequel la composition formant ingrédient de tourage comprend en sus un constituant sélectionné dans un groupe constitué du beurre, de la margarine, du saindoux et de la graisse alimentaire.

9. Un procédé comprenant : (a) le fait de fournir de la pâte et une composition formant ingrédient de tourage, la composition formant ingrédient de tourage contenant au moins deux pour cent en poids rapporté au poids total de composition formant ingrédient de tourage d'un oléogel comprenant un mélange d'éthyl cellulose et d'un triacylglycérol, dans lequel ledit oléogel est un réseau de gel thermoréversible, tridimensionnel ; (b) le fait de disposer la composition formant ingrédient de tourage sur la pâte de façon à former une composition en couches comprenant une couche de composition formant ingrédient de tourage sur une couche de pâte ; et (c) le fait de replier la composition en couches sur elle-même une ou plusieurs fois pour former un article de n'importe quelle revendication précédente.

10. Le procédé de la revendication 9, comprenant en sus le fait de cuire l'article résultant de la revendication 9 pour former une pâtisserie feuilletée.
